Europäisches Patentamt

European Patent Office

Office européen des brevets

(11) Numéro de publication: **0 285 207**

**A1**

(12) # DEMANDE DE BREVET EUROPEEN

(21) Numéro de dépôt: 88200516.8

(22) Date de dépôt: 21.03.88

(51) Int. Cl.⁴: **H04N 11/00**

(30) Priorité: **24.03.87 FR 8704071**

(43) Date de publication de la demande:
**05.10.88 Bulletin 88/40**

(84) Etats contractants désignés:
**DE FR GB**

(71) Demandeur: **Laboratoires d'Electronique et de Physique Appliquée L.E.P.**
**3, Avenue Descartes**
**F-94450 Limeil-Brévannes(FR)**

(84) **FR**

(71) Demandeur: **N.V. Philips' Gloeilampenfabrieken**
**Groenewoudseweg 1**
**NL-5621 BA Eindhoven(NL)**

(84) **DE GB**

(72) Inventeur: **Fonsalas, Frédéric**
**Société Civile S.P.I.D. 209 rue l'Université**
**F-75007 Paris(FR)**
Inventeur: **Lejard, Jean-Yves**
**Société Civile S.P.I.D. 209 rue l'Université**
**F-75007 Paris(FR)**
Inventeur: **Hayet, Pascal**
**Société Civile S.P.I.D. 209 rue l'Université**
**F-75007 Paris(FR)**
Inventeur: **Le Queau, Marcel**
**Société Civile S.P.I.D. 209 rue l'Université**
**F-75007 Paris(FR)**

(74) Mandataire: **Chaffraix, Jean et al**
**Société Civile S.P.I.D. 209, rue de l'Université**
**F-75007 Paris(FR)**

(54) **Système de transmission d'images à haute définition par un canal à bande passante relativement étroite, ainsi qu'un émetteur et un récepteur convenant pour le systéme.**

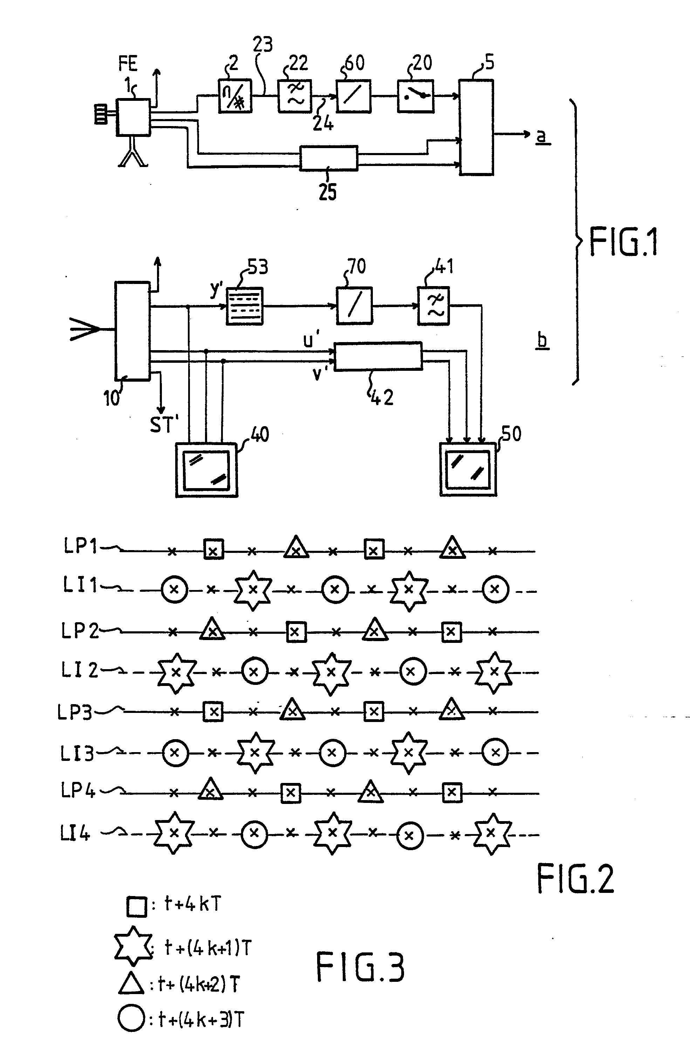

(57) Ce système comporte, d'une part, une partie émission (Fig. 1a) constituée d'un organe de prise de vues (1) pour fournir lesdites images constituées par un ensemble de points ou échantillons répartis sur des lignes paires et impaires, d'un organe de filtrage (22) pour filtrer lesdits échantillons, d'un organe de sous-échantillonnage (20) pour prélever certains échantillons à la sortie de l'organe de filtrage et d'un circuit émetteur (5) pour transmettre sur le canal les échantillons prélevés et d'autre part au moins une partie réception (Fig.1b) constituée d'un circuit récepteur (10), d'un organe d'interpolation (41) pour reconstituer des échantillons à partir des échantillons reçus et d'un premier circuit de visualisation (50) pour reconstituer une image à haute définition ; l'organe de sous-échantillonnage (20) est conçu pour prélever dans les images fournies par l'organe de prise de vues un certain nombre d'échantillons en trois trames successives.
Application : D2 MAC/paquet.

FIG.1

**"Système de transmission d'images à haute définition par un canal à bande passante relativement étroite, ainsi qu'un émetteur et un récepteur convenant pour le système".**

La présente invention concerne un système de transmission d'images de télévision à haute définition par un canal à bande passante relativement étroite, système comportant, d'une part, une partie émission constituée d'un organe de prise de vues pour fournir lesdites images formées d'un ensemble de points ou échantillons répartis sur des lignes paires et impaires, d'un organe de filtrage pour filtrer lesdits échantillons, d'un organe de sous-échantillonnage pour prélever certains échantillons à la sortie de l'organe de filtrage et d'un circuit émetteur pour transmettre sur le canal selon des trames d'émission les échantillons prélevés et d'autre part au moins une partie réception constituée d'un circuit récepteur pour recevoir les échantillons provenant du circuit émetteur, d'un organe d'interpolation pour reconstituer des échantillons à partir des échantillons reçus et d'un premier circuit de visualisation pour transformer les échantillons reconstitués en une image restituée de haute définition.

La présente invention concerne aussi un émetteur et un récepteur convenant pour le système.

De tels systèmes sont bien connus et sont susceptibles de trouver d'importantes applications notamment pour la transmission d'images à haute définition compatible avec les standards "MAC" et plus particulièrement le standard "D2-MAC" (avis 601 du C.C.I.R.).

Un système connu de ce genre est décrit dans l'article "A SINGLE CHANNEL HDTV BROADCAST SYSTEM - THE MUSE-" de Yuichi Ninomiya et autres..., paru dans la revue "NHK LABORATORIES NOTE" série 304 de septembre 1984. Ce système MUSE non adapté aux standards précités peut l'être aisément en modifiant d'une manière linéaire ses différents paramètres ca ractéristiques. Ce système connu utilise, pour transmettre les échantillons d'une image, une structure d'échantillonnage qui s'étale sur quatre trames. Des points appartenant à différentes positions spatiales sont transmis dans ces quatre trames consécutives ; lorsque l'image traitée est fixe on obtient une bonne qualité. Par contre, la transmission en quatre trames ne permet pas d'obtenir une bonne qualité pour la restitution d'images mobiles dont des parties se déplacent de façon perceptible pendant quatre trames successives.

Un des buts de la présente invention est de remédier dans une certaine mesure à cet inconvénient et donc de pouvoir restituer, avec une meilleure qualité des images mobiles.

Les images à haute définition ayant un format 16/9 (rapport largeur sur hauteur) proche du format cinéma, s'impose alors l'exigence que le nombre de points restitués selon les axes horizontaux et verticaux de l'image soit pratiquement dans le même rapport.

Un autre but de cette invention est de satisfaire cette exigence.

Pour atteindre ces buts, un système du genre mentionné dans le préambule est remarquable en ce que l'organe de sous-échantillonnage est conçu pour prélever dans les images fournies par l'organe de prises de vues un certain nombre d'échantillons et pour les fournir en trois trames successives au circuit émetteur.

Selon une caractéristique importante de l'invention, l'organe de sous-échantillonnage est conçu pour prélever, dans des séries de six échantillons se succédant sur les lignes et décalées d'une ligne à l'autre, le premier échantillon de la série pour la première trame, le cinquième échantillon pour la deuxième trame et le troisième échantillon pour la troisième trame.

Outre la possibilité de transmettre des images de haute définition, on s'impose aussi une compatibilité avec un système comportant par exemple des récepteurs de type D2 MAC/paquet.

Ainsi, selon une autre caractéristique de l'invention on propose, pour assurer une bonne compatibilité pour la restitution d'image à définition normale du côté de la partie réception, un organe de sous-échantillonnage conçu pour fournir au circuit émetteur une suite d'échantillons en quatre trames de visualisation, selon un ordre dit "ordre compatible" :

- la première trame étant formée des premiers échantillons transmis de ladite série prélevés tout à tour sur une ligne et sur la suivante,

- la deuxième, des cinquièmes échantillons transmis de la série, prélevés tour à tour sur une ligne et la suivante,

- la troisième, des troisièmes échantillons transmis de sa série, prélevés tour à tour sur une ligne et la suivante,

- la quatrième, des cinquièmes échantillons transmis de la série, prélevés tout à tour sur une ligne et la suivante.

La description suivante accompagnée des dessins ci-annexés, le tout donné à titre d'exemple non limitatif fera bien comprendre comment l'invention peut être réalisée.

Sur les dessins :

La figure 1 représente un dispositif de transmission conforme à l'invention.

2

La figure 2 représente la structure d'échantillonnage d'un système de l'art antérieur.

La figure 3 est une légende pour la figure 2.

La figure 4 représente les points dans l'espace de Fourier autour desquels se produisent les spectres d'image et qui sont relatifs à la figure 2.

La figure 5 représente un support grossier de la fonction de transfert du système de l'art connu.

La figure 6 représente la structure d'échantillonnage conforme à l'invention.

La figure 7 est une légende pour la figure 6.

La figure 8 représente les points de l'espace de Fourier autour desquels se produisent les spectres d'image et qui sont relatifs à la figure 6.

La figure 9 représente un support de la fonction de transfert d'un organe de filtrage convenant pour l'invention.

La figure 10 montre en détail la structure possible de l'organe de filtrage.

La figure 11 montre en détail la structure préférée de l'organe de filtrage.

La figure 12 montre le support de la fonction de transfert d'un premier filtre.

La figure 13 montre le support de la fonction de transfert d'un deuxième filtre.

La figure 14 montre en détail la structure du premier filtre.

La figure 15 montre en détail la structure du deuxième filtre.

La figure 16 montre en détail la structure d'un troisième filtre.

La figure 17 montre en détail la structure d'un organe de recalage temporel.

La figure 18 montre en détail la structure d'un organe de changement de rythme.

La figure 19 montre en détail la structure d'un organe d'interpolation.

La figure 20 montre en détail la structure d'un organe de sous-échantillonnage.

La figure 21 montre le changement d'ordre : ordre normal-ordre compatible.

La figure 22 est une légende pour la figure 21.

La figure 23 montre la structure de l'organe de changement d'ordre.

Le dispositif de la figure 1 est formé d'une partie émission représentée en a et d'une partie réception représentée en b.

Sur cette figure 1, la référence 1 indique une caméra de télévision à haute définition fournissant sous forme analogique les signaux de luminance Y et de différence de couleur U et V. Dans le présent exposé, on s'intéressera surtout aux signaux de luminance car ce sont eux qui posent le plus de problème de transmission. Un traitement similaire à celui qui va être décrit peut être effectué sur les signaux U et V avec cependant une cadence beaucoup moins élevée. Un convertisseur analogique-numérique 2 fournit différents échantillons numériques dont chacun représente la luminance d'un point d'image. Ces échantillons surgissent à des instants t, t+TP, t+2TP,... avec TP = 1/(54 MHz) et définissent une image entrelacée comportant 1250 lignes, ce qui représente une définition double des images normales à 625 lignes classiques, tant en direction verticale qu'en direction horizontale. Comme on veut transmettre cette image au moyen d'un circuit de transmission 5-10 fonctionnant selon une norme MAC et formé d'un circuit émetteur 5 et d'un circuit récepteur 10, il ne faut transmettre que quelques-uns de ces échantillons ; pour cela on utilise un organe de sous-échantillonnage 20 précédé d'un organe de filtrage 22 muni d'une borne d'entrée 23 et d'une borne de sortie 24. Les signaux U et V subissent le même traitement effectué par l'organe 25 à une fréquence deux fois moindre.

Le circuit de réception 10 fournit les signaux de luminance et de différence de couleur Y', U' et V' respectivement d'une part, à un téléviseur 40 pour la restitution d'une image de télévision à définition normale et d'autre part, à des organes d'interpolation 41 et 42 pour élaborer des points supplémentaires à partir des points reçus afin qu'un deuxième téléviseur 50 fournisse une image à haute définition.

Selon la caractéristique précitée assurant la compatibilité, il est prévu du côté réception un organe de changement d'ordre 53 qui modifie l'ordre d'apparition des échantillons à la sortie du circuit récepteur d'une manière qui sera explicitée plus loin dans le présent exposé.

Pour bien comprendre l'intérêt de la présente invention, on a représenté à la figure 2 la structure de l'échantillonnage du dispositif "MUSE" précité. Tous les échantillons à la sortie du convertisseur 2 sont repérés par des croix et répartis selon des lignes paires LP en trait con tinu ...LP1, LP2, LP3, LP4 ... et des lignes impaires LI en tirets LI1, LI2, LI3, LI4. L'organe de sous-échantillonnage du système connu transmet dans une première trame transmise à l'instant t ou (t+kT) avec k = 0, 1, 2,... et T = durée d'une trame, tous les échantillons entourés d'un carré. Ces échantillons sont prélevés sur les lignes paires un sur quatre et en quinconce ; l'organe de sous-échantillonnage transmet ensuite dans une deuxième trame aux instants t+(4k+1)T tous les échantillons entourés d'une étoile. Ces échantillons sont prélevés sur les lignes impaires un sur quatre et en quinconce et décalés horizontalement d'un cran par rapport à ceux transmis à l'instant t.

Puis aux instants t + (4k + 2)T dans une troisième trame, sont transmis les échantillons entourés d'un triangle. Ces échantillons sont prélevés sur les lignes paires un échantillon sur quatre et décalés horizontalement de deux crans par rapport aux échantillons entourés d'un carré.

Enfin à l'instant t + (4k + 3)T dans une quatrième trame sont transmis les échantillons entourés d'un cercle. Ces échantillons sont prélevés sur les lignes impaires un sur quatre et décalés horizontalement de deux crans par rapport aux échantillons entourés d'une étoile.

La figure 3 est une légende qui rappelle la transmission par trames des différents échantillons certains survenant successivement aux instants t + 4kT, t + (4k + 1)T, t + (4k + 2)T, t + (4k + 3)T.

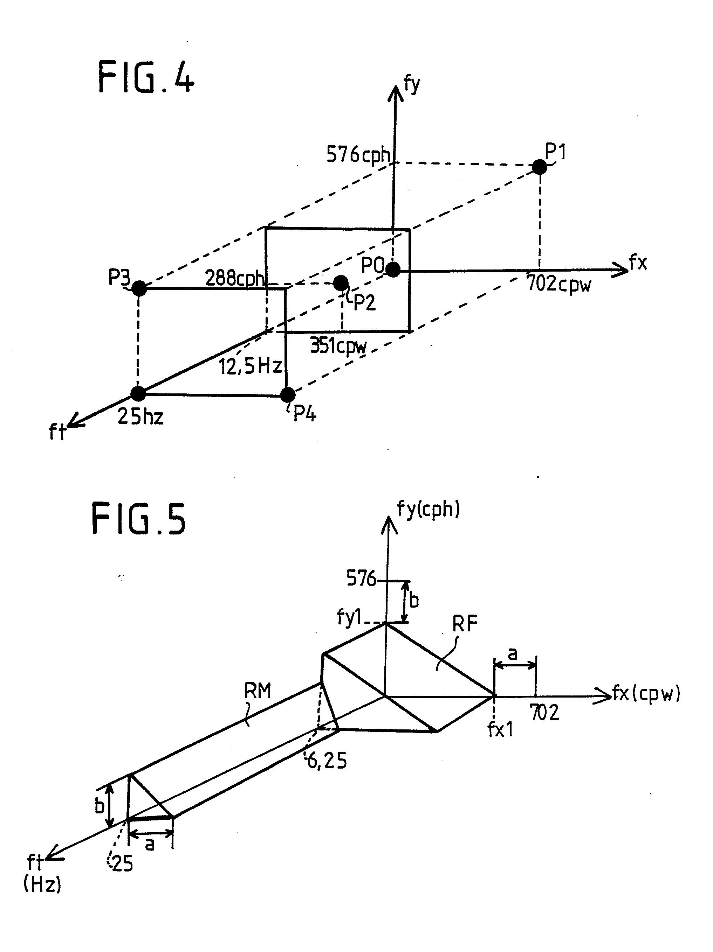

A toute structure d'échantillonnage périodique spatio-temporelle correspond aussi une structure périodique dans le domaine de Fourier. On pourra à ce sujet consulter l'article de KRETZ et SABATIER intitulé "Echantillonnage des images de télévision" paru dans les Annales de Télécommunications 36, No.3-4, 1981, pages 231-273. On montre alors qu'à la structure de la figure 2 correspond la structure dans le domaine de Fourier montrée à la figure 4. Sur cette figure on a représenté par P0, P1, P2, P3 et P4 les points qui sont les centres des spectres spatio-temporels des images. Ces points sont repérés par des axes fx, fy et ft gradués respectivement cpw (unité de définition horizontale correspondant aux cycles par largeur d'image) en cph (unité correspondant aux cycles par hauteur d'image) et en Hz.

Le point P0 est à l'origine. Le point P1 est défini par fx = 702 cpw, fy = 576 cph et ft = 0, le point P2 par fx = 351 cpw, fy = 288 cph et ft = 12,5 Hz, le point P3 par fx = 0, fy = 576 cph et ft = 25 Hz, le point P4 par fx = 702 cpw, fy = 0 et ft = 25 Hz.

Pour éviter le chevauchement des spectres qui se produisent autour de ces points, on voit qu'il est nécessaire de procéder à un filtrage avant de sous-échantillonner le signal.

La figure 5 représente un domaine de filtrage convenant pour la structure d'échantillonnage de la figure 4. Ce domaine de filtrage est un volume à l'intérieur duquel la fonction de transfert d'un filtrage idéal vaudrait "1" et à l'extérieur duquel cette fonction serait nulle.

Ce domaine de filtrage est composé de deux régions RF et RM. La région RF est placée au voisinage du plan de fréquences temporelles nulles et son extension selon les directions fx et fy est plus importante que la deuxième région RM située dans des fréquences temporelles plus élevées. En pratique ces deux régions correspondent pour la première RF au cas des images fixes ou animées de mouvements lents et la seconde RM au cas des images en mouvement rapide. La demanderesse s'est rendu compte, puisque l'on doit éviter tout recouvrement de spectre après sous-échantillonnage, que l'on aboutit à une condition restrictive sur l'extension maximale de ces deux zones RF et RM selon les axes fy et fx.

Plus précisément la somme des résolutions, selon ces axes, concernant les images quasi-statiques et mobiles ne doit pas excéder la demi-fréquence d'échantillonnage. Ainsi en se reportant à la figure 5, la région RF coupe l'axe fx en un point fx1 et l'axe fy en un point fy1 tandis que la région RM s'étale selon l'axe fx jusqu'à une distance "a" et selon l'axe fy jusqu'à une distance "b". Si on appelle d'une part Rvf et Rhf les résolutions verticales et horizontales des images fixes et d'autre part Rvm et Rhm les résolutions verticales et horizontales des images mobiles, on a :

Rhf = fx1
Rhm = a
Rvf = fy1
Rvf = b

En considérant les coordonnées du point P1 on a au mieux :
Rhf + Rhm = 702 cpw
Rvf + Rvm = 576 cph

En choisissant des valeurs jugées convenables sur des images naturelles pour les paramètres a, b, fx1, fy1, on peut obtenir par exemple :
Rhf = 421,2 cpw    Rvf = 345,6
Rhm = 280,8 cpw    Rvm = 230,4

Outre la condition de somme mentionnée on doit bien voir que le point P2 limite en fy et fx le déploiement de la région RM tout en la prolongeant vers ft = 0. Ceci explique le premier inconvénient précité qui, on le rappelle consiste en une mauvaise restitution des images mobiles.

Le deuxième inconvénient découle des valeurs Rhf et Rvf précitées. En effet si on fait leur rapport $\rho$ on trouve :

$$\rho = \frac{Rhf}{Rvf} = 1{,}22$$

Ce rapport est à rapprocher du format cinéma 16/9. Pour avoir une bonne vision de ce format on veut voir autant de points en horizontale qu'en verticale ; le rapport $\rho$ est donc trop faible.

Pour éviter les inconvénients précités, conformément à l'invention, l'organe de sous-échantillonnage est conçu pour prélever des échantillons dans les images venant de l'organe de prise de vues 1 et pour les fournir en trois trames successives.

Pour cela, on a prévu un organe de changement de rythme d'émission 60 pour passer d'un rythme 1/54 MHz à 1/81 MHz inséré entre l'organe de filtrage 22 et l'organe de sous-échantillonnage 20 et un organe de changement de rythme de réception 70 inséré entre l'organe d'interpolation 41 et l'organe de changement d'ordre 53 pour passer d'un rythme de 1/81 MHz à 1/54 MHz. L'organe de sous-échantillonnage va prélever les échantillons à la sortie de l'organe 60 de la manière suivante selon l'ordre dit "ordre normal".

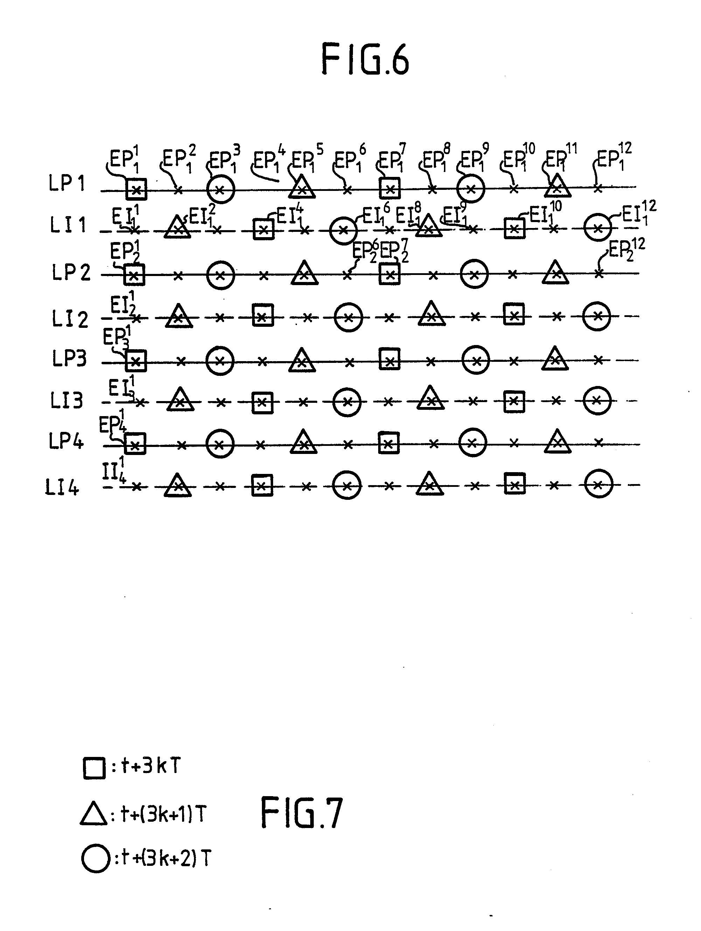

La figure 6, tout comme la figure 2, montre par des croix les échantillons fournis par l'organe 60. Ces échantillons sont fournis les uns derrière les autres pour des lignes successives. A la ligne LP1 on trouve les différents échantillons $EP^1_1$, $EP^2_1$,... $EP^{12}_1$, à la ligne LI1 les échantillons $EI^1_0$, $EI^2_0$,... Ainsi qu'on l'a compris la deuxième lettre de référence de ces échantillons indique la parité de la ligne à laquelle ils apparaissent (P = paire et I = impaire), l'indice supérieur indique leur emplacement relatif dans la ligne considérée, l'indice inférieur le numéro de la ligne paire ou impaire.

Selon l'invention, les échantillons sont considérés en séries de six. Pour les lignes paires ces séries sont disposées l'une sous l'autre. Ainsi, une première série comprendra les échantillons ($EP^1_1$ ... $EP^6_1$) une deuxième série ($EP^7_1$ ... $EP^{12}_1$) pour la ligne LP1, une série comprendra les échantillons $EP^1_2$ ... $EP^6_2$ une deuxième $EP^7_2$ ... $EP^{12}_2$ pour la ligne LP2.

Bien que les séries des lignes paires soient disposées l'une sous l'autre, celles-ci sont décalées par rapport aux séries des lignes impaires. Ainsi une série d'échantillons de lignes impaires comportant les échantillons $EI^4_1$, $EI^5_2$, $EI^6_2$ ... $EI^9_2$, se trouve déplacée vers la droite de trois positions d'échantillons par rapport à la série comportant les échantillons $EP^1_1$, $EP^2_1$... $EP^6_1$. Un échantillon sur deux des échantillons formant les images va être transmis en trois trames successives. Dans une première trame les échantillons entourés d'un carré vont être d'abord transmis, c'est-à-dire les premiers échantillons des séries de six :

...$EP^1_1$, $EP^7_1$,... pour la ligne LP1 ;

...$EI^4_1$, $EI^{10}_1$ ... pour la ligne LI1, ...etc.

Dans une deuxième trame, ce sera au tour des échantillons entourés d'un triangle, c'est-à-dire les cinquièmes échantillons desdites séries, soit :

les échantillons ...$EP^5_1$, $EP^{11}_1$... pour la ligne LP1,

les échantillons ...$EI^2_1$, $EI^8_1$, ... pour la ligne LI1.

Dans une troisième trame, ce sera enfin les échantillons entourés d'un cercle, c'est-à-dire les troisièmes échantillons desdites séries, soit :

les échantillons ...$EP^3_1$, $EP^9_1$ ...pour la ligne LP1,

les échantillons ...$EI^6_1$, $EI^{12}_1$... pour la ligne LI1.

La figure 7 est la légende rappelant la répartition des échantillons dans leur trame respective c'est-à-dire aux instants $t + 3kT$, $t + (3k + 1)T$, $t + (3k + 2)T$.

A cette structure d'échantillonnage de la figure 6 correspond une structure périodique dans le domaine de Fourier. Les points PP0, PP1, PP2, PP3 et PP4 sont les spectres spatio-temporels des images. Les coordonnées de ces points sont les suivantes :

PP0 : (0 Hz, 0 cph, 0 cpw)      PP1 : (0,576 cph, 0 cpw)

PP2 : (0 Hz, 288 cph, 1053 cpw)      PP3 : (16,66 Hz, 288 cph, 350 cpw)

PP4 : (16,66 Hz, 0 cph, 702 cpw).

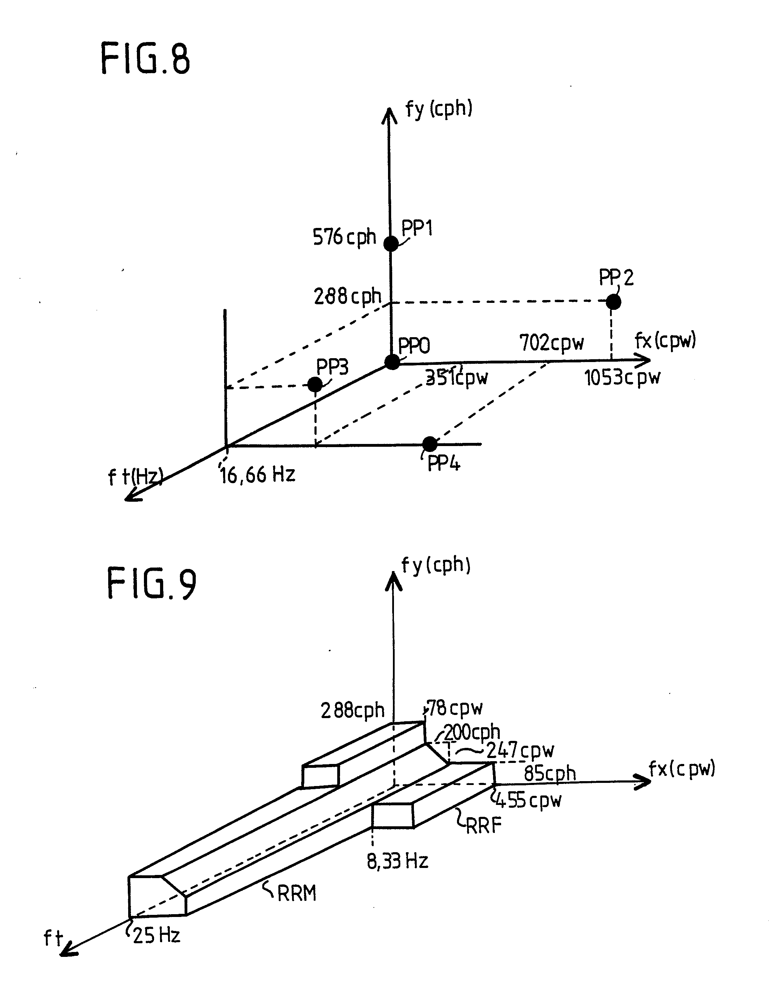

La figure 9 montre un support possible de la fonction de transfert retenue pour cette structure d'échantillonnage. Ce support sera approché par la réalisation que l'on va décrire. Aux formes triangulaires montrées à la figure 5 on a préféré plus de formes rectangulaires plus facilement approchées par les filtres qui vont être décrits ci-après. On a repéré par RRF la région relative aux images statiques et par RRM la région relative aux images mobiles. Ces deux régions sont séparées par un plan défini par $f_t$ = 8,33 Hz.

La région RRF de forme prismatique est limitée par prisme mené sur les segments rejoignant les points suivants du plan fx, fy :

(0,288 cph) (78 cpw, 288 cph) (78 cpw, 200 cph) (247 cpw, 85 cph) (455 cpw, 85 cph) et (455 cpw, 0).

La région RRM est également de forme prismatique définie à partir des segments rejoignant les points suivants du plan fx, fy :

(0,200 cph), (78 cpw, 200 cph) (247 cpw, 85 cph) et (247 cpw, 0).

On peut alors obtenir un rapport $\rho$ = 1,58 bien plus proche du format cinéma.

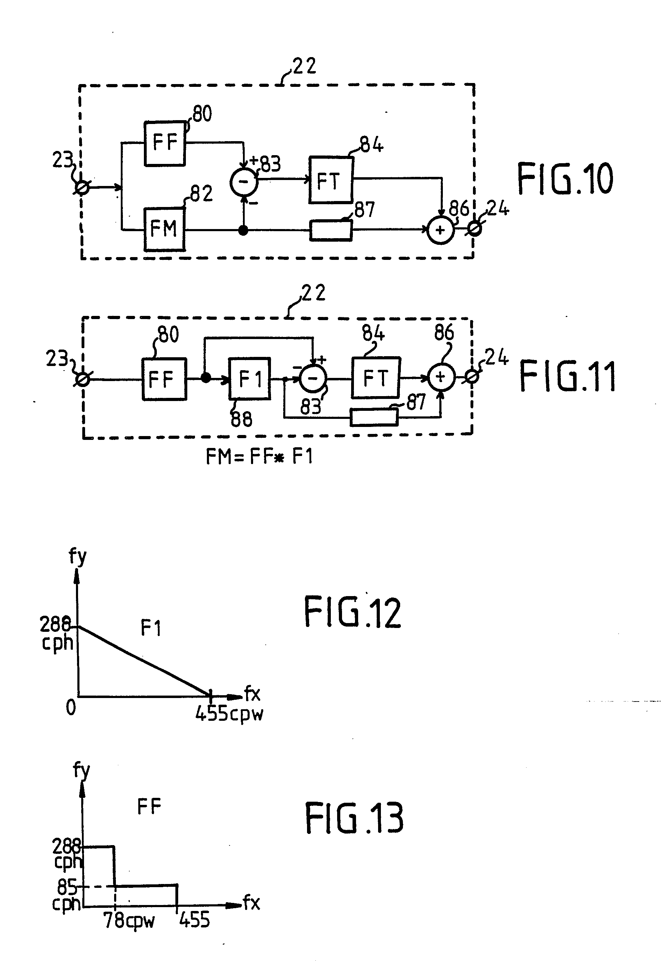

La figure 10 représente une première structure de l'organe de filtrage 22. Il se compose d'un premier filtre FF 80 relatif aux images fixes et d'un second filtre FM 82 relatif aux images mobiles 82. Les entrées de ces filtres sont connectées à l'entrée 23 et leur sortie aux entrées ( + ) et (-) respectivement d'un soustracteur 83. La sortie de ce soustracteur 83 est connectée à l'entrée d'un filtre temporel FT 84. Un additionneur 86 effectue la somme des échantillons issus de ce filtre 84 et d'un organe de recalage temporel 87 dont l'entrée est reliée à la sortie du filtre 82. La sortie de l'additionneur 86 constitue la sortie 24 de l'organe 22.

A cette structure on a préféré la structure montrée à la figure 11. Ici, on a remplacé le filtre 82 par la combinaison du filtre 80 et d'un filtre F1 88 de sorte que la fonction de transfert du filtre F1 soit telle que : FM = FF * F1 où FM, FF sont les fonctions de transfert des filtres 82 et 80 et où le symbole * signifie le produit de convolution.

La figure 12 représente dans le plan fx,fy la fonction de transfert F1 qui est une droite passant par les points fx = 0, fy = 288 cph ; fx = 455 cpw et fy = 0 tandis que la figure 13 représente la fonction de transfert FF formée d'un palier fy = 288 cph allant de fx = 78 cpw à 455 cpw.

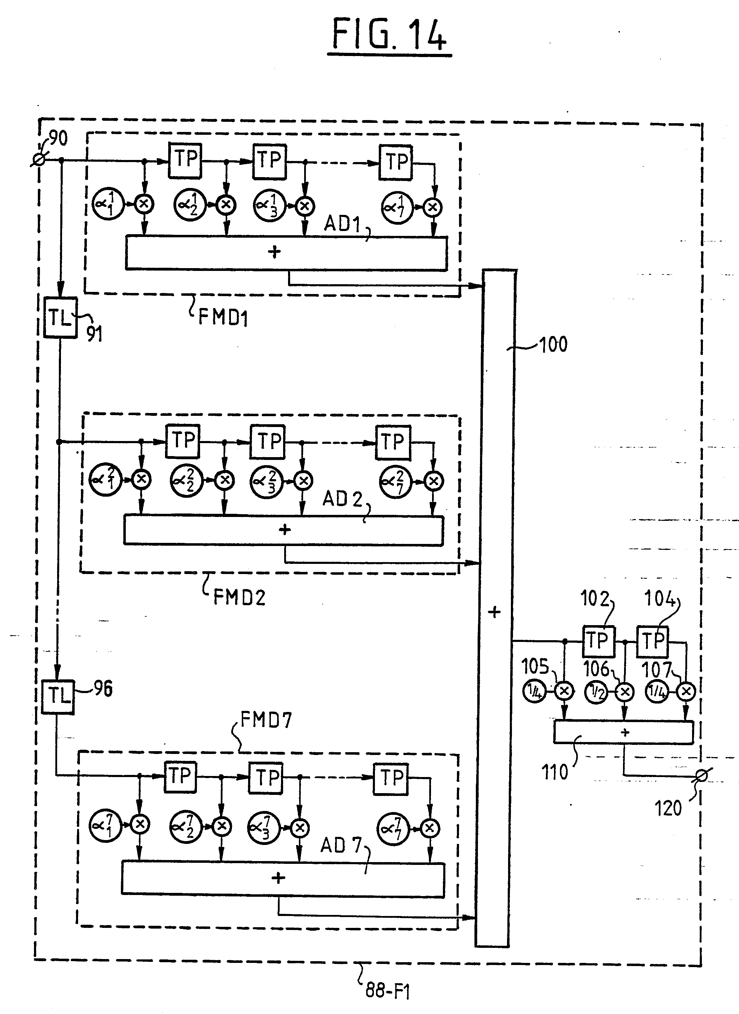

A la figure 14 on a montré la structure détaillée du filtre 88 F1. Il se compose d'une pluralité de filtres mo nodimensionnels FMD1, FMD2,... FMD7. Chacun de ces filtres est formé à partir d'une chaîne d'éléments de retard amenant un retard TP égal au temps qui sépare deux points d'images fournies par la caméra 1. A partir de cette chaîne on établit différents points de branchement pour que les échantillons retardés par cette chaîne soient multipliés par des coefficients $\alpha^i j$ où l'indice "i" rappelle le numéro du filtre monodimensionnel et l'indice "j" le rang de branchement ; i = 1 représente l'échantillon courant à l'entrée de la chaîne et j = 7 l'échantillon le plus retardé. L'entrée du filtre FMD1 est connectée à l'entrée 90 du filtre 88 et les entrées des autres filtres FMD2 à FMD7 sont reliées aux sorties d'éléments de retard 91, 92,... 96 dont chacun amène un retard TL égal à la durée d'une ligne. La sortie des filtres FMD1 à FMD7 est constituée par la sortie d'additionneurs AD1 à AD7 qui fournissent donc la somme pondérée des échantillons multipliés par les coefficients $\alpha^i j$ précités. Un additionneur 100 effectue la somme des résultats élaborés par les additionneurs AD1 à AD7.

Le signal de sortie de l'additionneur 100 est à son tour filtré par un filtre constitué par deux éléments de retard 102 et 104 amenant un retard égal à TP, connectés en cascade à la sortie de l'additionneur 100. Trois multiplieurs 105, 106 et 107 multiplient respectivement par 1/4, 1/2 et 1/4 les échantillons à l'entrée de l'élément 102, à sa sortie et à la sortie de l'élément 104. Un additionneur 110 effectue la somme des résultats des multiplieurs 105 à 107. La sortie 120 du filtre 81 est constituée par la sortie de cet additionneur 110. Les coefficients $\alpha^i j$ sont donnés par le tableau ci-dessous :

## TABLEAU I

| i \ j | 1 | 2 | 3 | 4 | 5 | 6 | 7 |
|---|---|---|---|---|---|---|---|
| 1 | $-\frac{1}{16}$ | 0 | 0 | 0 | 0 | 0 | $-\frac{1}{16}$ |
| 2 | 0 | 0 | 0 | 0 | 0 | 0 | 0 |
| 3 | 0 | 0 | $\frac{9}{32}$ | 0 | $\frac{9}{32}$ | 0 | 0 |
| 4 | 0 | 0 | 0 | 0 | 0 | 0 | 0 |
| 5 | 0 | 0 | $\frac{9}{32}$ | 0 | $\frac{9}{32}$ | 0 | 0 |
| 6 | 0 | 0 | 0 | 0 | 0 | 0 | 0 |
| 7 | $-\frac{1}{16}$ | 0 | 0 | 0 | 0 | 0 | $-\frac{1}{16}$ |

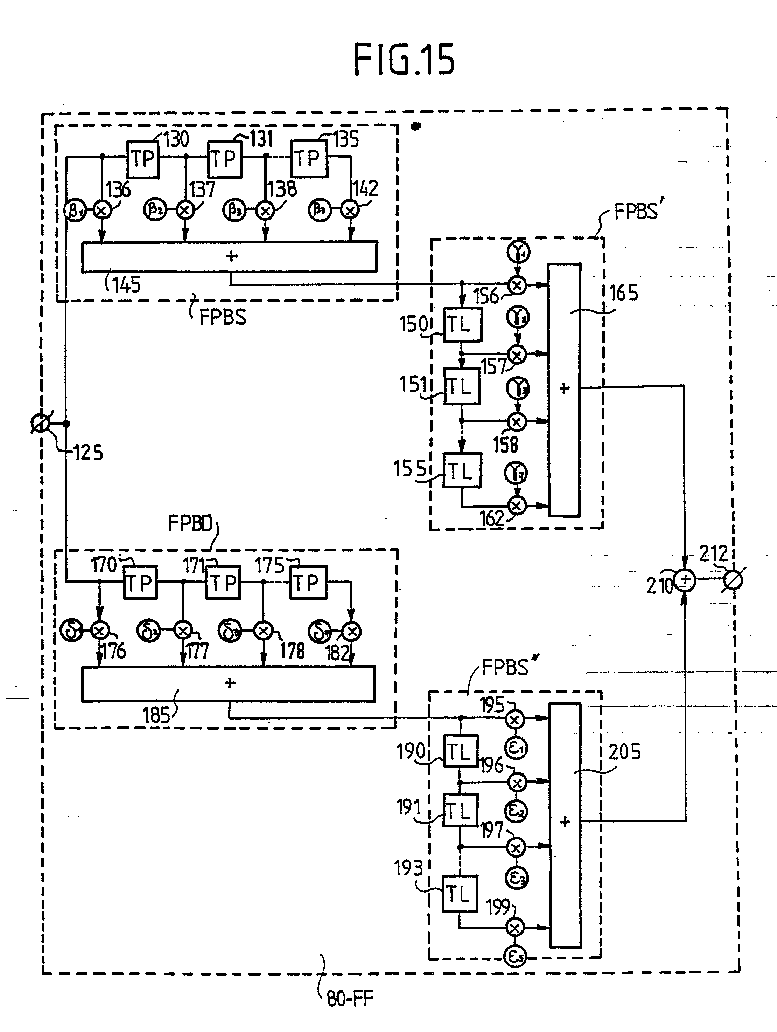

A la figure 15, on a représenté la structure du filtre 80.

Il se compose d'une première partie FPBS faisant office de filtre passe-bas (fréquence de coupure 78 cpw). Elle est connectée à l'entrée 125 du filtre 80. Cette partie FPBS est formée d'une chaîne de 6 éléments de retard 130 à 135 dont chacun amène un retard égal à TP. Des multiplieurs 136, 137, 138,...., 142 multiplient respectivement par des coefficients $\beta_1 ... \beta_7$ les échantillons présents à l'entrée de l'élément 130, à sa sortie, et aux sorties des éléments suivants ; un additionneur 145 effectue la somme de tous les résultats de ces multiplieurs. Le tableau II ci-dessous donne la valeur des coefficients $\beta$.

## TABLEAU II

| $\beta_1$ | $\beta_2$ | $\beta_3$ | $\beta_4$ | $\beta_5$ | $\beta_6$ | $\beta_7$ |
|------|------|------|------|------|------|------|
| 1/16 | 2/16 | 3/16 | 4/16 | 3/16 | 2/16 | 1/16 |

Le filtre FPBS est suivi d'un filtre FPBS' ayant une fonction de filtrage passe-bas vertical dont la fréquence de coupure est 85 cph. Il est formé d'une chaîne de 6 éléments de retard 150 à 155 (amenant chacun un retard égal à la durée TL) et de 7 multiplieurs 156 à 162 pour multiplier par des coefficients $\gamma_1 ...$ $\gamma_7$ les échantillons à l'entrée de l'élément 150, à sa sortie et aux sortie des éléments suivants ; un additionneur 165 effectue la somme des résultats élaborés par les multiplieurs 156 à 162. Le Tableau III ci-dessous donne la valeur des coefficients $\gamma$.

## TABLEAU III

| $\gamma_1$ | $\gamma_2$ | $\gamma_3$ | $\gamma_4$ | $\gamma_5$ | $\gamma_6$ | $\gamma_7$ |
|------|------|------|------|------|------|------|
| - 1/16 | - 3/16 | 1/16 | 6/16 | 1/16 | - 3/16 | - 1/16 |

A l'entrée du filtre 80, se trouve connecté un filtre passe-bande horizontal FPBD (passant la bande 78 cpw à 455 cpw). Il est composé d'une chaîne de 6 éléments de retard 170 à 175 amenant chacun un retard égal à TP. Des multiplieurs 176 à 182 multiplient respectivement par $\delta_1$, $\delta_2$,... $\delta_7$ les échantillons à l'entrée de l'élément 170, à sa sortie et aux sorties des éléments suivants. Un additionneur 185 recueille tous les résultats des multiplieurs 176 à 182. Le Tableau IV ci-dessous donne la valeur de ces coefficients $\delta$.

## TABLEAU IV

| $\delta_1$ | $\delta_2$ | $\delta_3$ | $\delta_4$ | $\delta_5$ | $\delta_6$ | $\delta_7$ |
|------|------|------|------|------|------|------|
| - 1/16 | 0 | 9/16 | 16/16 | 9/16 | 0 | - 1/16 |

Le filtre FPBD est suivi d'un filtre FBPS" faisant office de fltre passe-bas vertical dont la fréquence de coupure est égale à 85 cph. Il est formé d'une chaîne de 5 éléments de retard 190 à 194, chacun amenant un retard égal à TL. Des multiplieurs 195 à 199 multiplient respectivement par $\epsilon_1$, $\epsilon_2$,... $\epsilon_5$ les échantillons à l'entrée de l'élément 190, à sa sortie et aux sorties des éléments suivants. Un additionneur 205 recueille tous les résultats des multiplieurs 195 à 199. Le Tableau V donne la valeur des coefficients $\epsilon$.

## TABLEAU V

| $\epsilon_1$ | $\epsilon_2$ | $\epsilon_3$ | $\epsilon_4$ | $\epsilon_5$ |
|------|------|------|------|------|
| - 1/16 | 4/16 | 10/16 | 4/16 | - 1/16 |

La sortie 212 du filtre 80 est constituée par la sortie d'un additionneur 210 effectuant la somme des échantillons produits par les filtres FPBS' et FPBS".

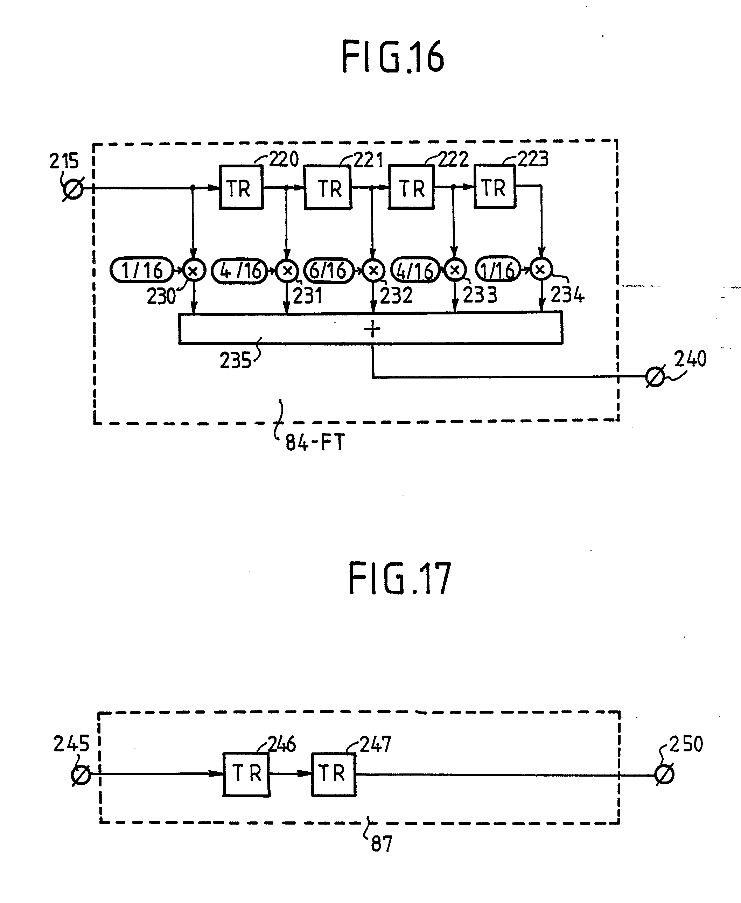

La figure 16 montre la structure du filtre 84. Il comporte, connectée à son entrée 215, une chaîne de quatre éléments de retard 220, 221, 222 et 223 amenant chacun un temps de retard égal à TR (durée T d'une trame) et cinq multiplieurs 230, 231, 232, 233 et 234 multipliant respectivement par 1/16, 4/16, 6/16, 4/16 et 1/16 les échantillons à l'entrée de l'élément 220, à sa sortie et aux sorties des éléments suivants. Un additionneur fournit sur la sortie 240 du filtre 84 la somme des résultats élaborés par les multiplieurs 230 à 234.

A la figure 17, on a représenté la structure de l'organe de recalage temporel 87. Il comporte, connecté à son entrée 245, un élément de retard 246 suivi d'un deuxième élément de retard 247 dont la sortie constitue la sortie 250 de l'organe 87, chacun de ces éléments amenant un retard égal à TR.

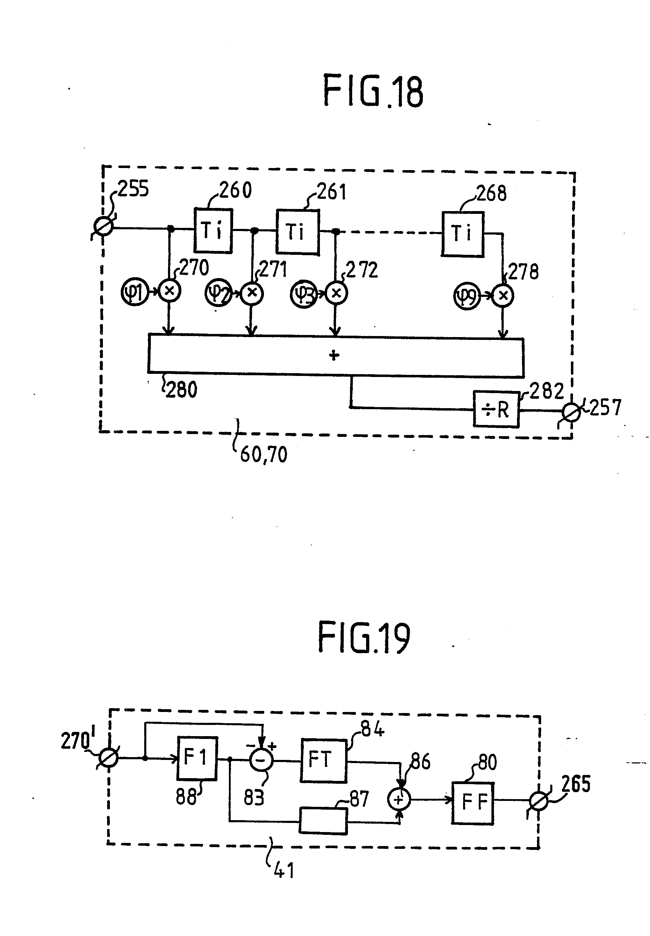

La figure 18 représente la structure des organes de changement de rythme 60 et 70. Ces organes font appel à des éléments de retard 260, 261,... 268 amenant chacun un retard Ti égal à 1/6 TP de sorte que pour l'organe 60 les échantillons considérés à l'entrée 255 sont formés de l'échantillon significatif suivi de cinq échantillons de valeur nulle ; à la sortie 257, un seul échantillon sur quatre sera fourni, tandis que pour l'organe 70, à l'entrée 255 on considérera l'échantillon significatif avec trois échantillons nuls et à la sortie 252 un seul échantillon sur six sera fourni.

Les échantillons à l'entrée de l'élément 260, à sa sortie et aux sorties des éléments suivants sont multipliés respectivement à l'aide de multiplieurs 270 à 278 par des coefficients $\phi_1$ à $\phi_9$ dont les valeurs sont données au Tableau VI.

## TABLEAU VI

| $\phi_1$ | $\phi_2$ | $\phi_3$ | $\phi_4$ | $\phi_5$ | $\phi_6$ | $\phi_7$ | $\phi_8$ | $\phi_9$ |
|---|---|---|---|---|---|---|---|---|
| − 1/27 | 0 | 3/27 | 7/27 | 9/27 | 7/27 | 3/27 | 0 | − 1/27 |

Un additionneur 280 fournit la somme des résultats des multiplieurs 270 à 278 à un préleveur d'échantillons 282, c'est-à-dire que un échantillon sur quatre est fourni dans le cas de l'organe 60 et un échantillon sur six dans le cas de l'organe 70, ainsi qu'il a été dit.

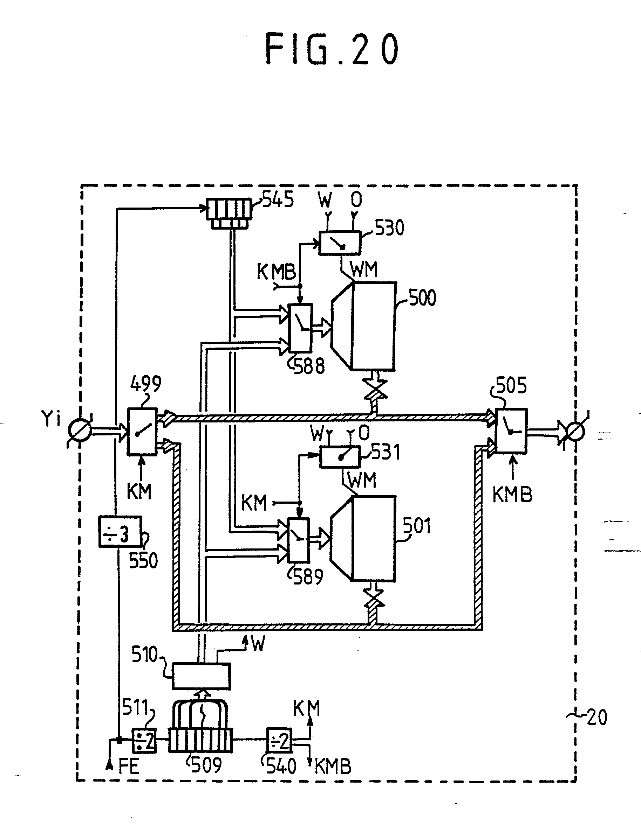

La figure 19 montre la structure de l'organe 41 formé des mêmes éléments que ceux de l'organe 22. On notera simplement que le filtre 80 est inséré entre la sortie 265 et l'additionneur 86, l'entrée 270 de l'organe 41 se faisant sur le filtre 88 et l'entrée ( + ) du soustracteur 83.

La figure 20 montre en détail l'organe de sous-échantillonnage 20.

Les échantillons de luminance filtrés par l'organe 22 se présentent à l'entrée d'un démultiplexeur 499 en vue d'être emmagasinés dans l'une des deux mémoires 500 et 501. Cet emmagasinage a lieu tour à tour dans ces deux mémoires, de sorte que lorsqu'une mémoire est en écriture, l'autre mémoire est en lecture. Un multiplexeur 505 permet d'appliquer les informations de l'une des mémoires 500 et 501 à l'entrée du circuit 5. La position des démultiplexeur 499 et multiplexeur 505 est fixée respectivement par des signaux complémentaires KM et KMB indiquant ainsi que lorsque les informations se trouvent à l'accès de données de la mémoire 500, l'accès de données de la mémoire 501 se trouve en relation avec l'entrée du circuit 5 et que lorsque l'accès de données de la mémoire 500 est à l'entrée du circuit 5, les informations sont aux accès de données de la mémoire 501.

L'adressage en écriture de ces mémoires 500 et 501 est effectué au moyen d'un compteur 509 auquel est associé un circuit de transcodage 510, ceci afin d'effectuer un adressage sélectif dans les mémoires 500 et 501 selon des critères de la structure d'échantillonnage conforme à l'invention. Le compteur 509 progresse au rythme de l'échantillonnage fixé par un signal FE issu d'un diviseur 511 divisant par deux la fréquence d'un signal à 162 MHz provenant par exemple de la caméra 1. Outre le code d'adresse d'écriture pour les mémoires 500 et 501, le signal W est dérivé pour valider l'écriture de ces mémoires ; ce signal est appliqué à la commande d'écriture WM des mémoires 500 et 501 par l'intermédiaire de multiplexeurs 530 et 531 à deux positions, commandés respectivement par les signaux KMB et KM. Les signaux KM et KMB proviennent d'une bascule 540 connectée en bout du compteur 509 ; comme la capacité de ce compteur correspond au nombre de points d'une image de haute définition, les signaux KM et KMB changent de valeur à chaque nouvelle image.

L'adressage en lecture des mémoires 500 et 501 est effectué directement au moyen d'un compteur 545 progressant au rythme des signaux provenant d'un diviseur de fréquence 550 divisant la fréquence du signal FE.

8

Pour appliquer le code de lecture ou d'écriture on utilise deux multiplexeurs 588 et 589 rattachés respectivement aux mémoires 500 et 501.

Ainsi qu'on vient de le voir le circuit 20 fournit au circuit 5 en trois trames les échantillons dans l'ordre normal déjà décrit.

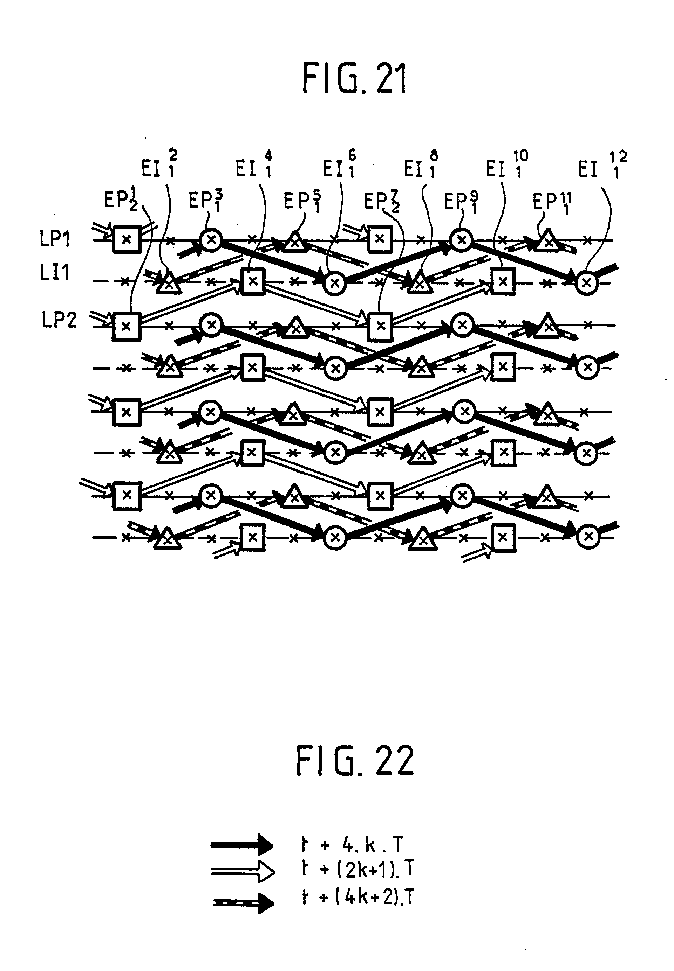

Selon une caractéristique de l'invention, pour assurer la compatibilité, on peut programmer de façon différente le circuit de transcodage 522 ; pour expliquer cela on se reporte à la figure 21 qui montre l'"ordre compatible" convenant au récepteur de définition normale 40.

On a prévu quatre trames de visualisation pour le téléviseur 40 . Dans ces trames, on prélève alternativement des échantillons transmis, appartenant à des lignes différentes.

Dans une première trame, considérée à des instant $t+4k.T$ (où $k = 0, 1...$ et $T = $ durée de chaque trame) on transmet les échantillons entourés d'un cercle en suivant les flèches noires ; de cette manière les échantillons $...EP^3_1, EI^6_1, EP^9_1, EI^{12}_1...$ sont successivement appliqués au téléviseur 40.

Dans une deuxième trame à l'instant $t+(2k+1)T$ avec k pair, on transmet les échantillons entourés d'un carré dans l'ordre indiqué par les flèches blanches, soit : $...EP^1_2, EI^4_1, EP^7_2, EI^{10}_1...$

Dans une troisième trame survenant à l'instant $t+(4k+2)T$, on transmet les échantillons entourés d'un triangle dans l'ordre indiqué par les flèches noires et blanches, soit : $...EI^2_1, EP^5_1, EI^8_1, EP^{11}_1...$

Dans une quatrième trame survenant à l'instant $t+(2k+1)T$ avec k impair, on transmet les échantillons situés aux mêmes places que dans la deuxième trame ce qui fait finalement trois trames fondamentales.

La figure 22 représente la légende des flèches utilisées à la figure 21.

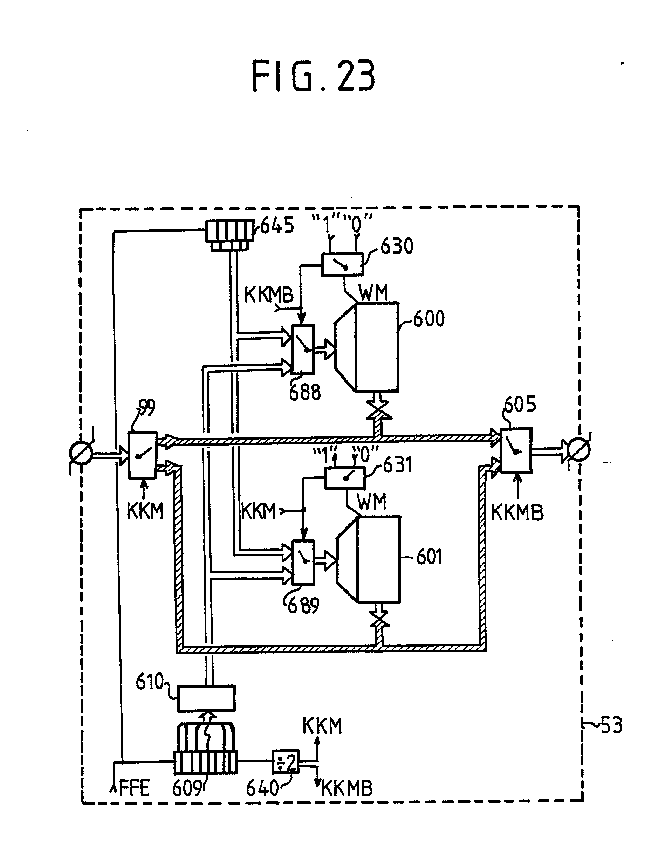

La figure 23 montre en détail la struture de l'organe de changement d'ordre 53. Cette structure est relative au signal de luminance Y'.

Les échantillons de luminance Y' se présentent à l'entrée d'un démultiplexeur 99 en vue d'être emmagasinés dans l'une des deux mémoires 600 et 601. Cet emmagasinage a lieu tour à tour dans ces deux mémoires, de sorte que lorsqu'une mémoire est en écriture, l'autre mémoire est en lecture. Un multiplexeur 605 permet d'appliquer les informations de l'une des mémoires 600 et 601 à l'entrée de l'organe 70. La position des démultiplexeur 99 et multiplexeur 605 est fixée respectivement par des signaux complémentaires KKM et KKMB indiquant ainsi que lorsque les informations Y' se trouvent à l'accès de données de la mémoire 600, l'accès de données de la mémoire 601 se trouve en relation avec l'entrée de l'organe 70 et que lorsque l'accès de données de la mémoire 600 est à l'entrée de l'organe 70, les informations Y' sont aux accès de données de la mémoire 601.

L'adressage en écriture de ces mémoires 600 et 601 est effectué au moyen d'un compteur 609 auquel est associé un circuit de transcodage 610, ceci afin d'effectuer un adressage sélectif dans les mémoires 600 et 601 selon des critères qui rétablissent "l'ordre normal". Le compteur 609 progresse au rythme de l'échantillonnage fixé par un signal FFE issu par exemple du circuit 10 et dont la fréquence est de 13,5 MHz ; un signal d'écriture "1" est appliqué à la commande d'écriture WM des mémoires 600 et 601 par l'intermédiaire de multiplexeurs 630 et 631 à deux positions, commandés respectivement par les signaux KKMB et KKM. Les signaux KKM et KKMB proviennent d'une bascule 640 connectée en bout du compteur 609 ; comme la capacité de ce compteur correspond au nombre de points d'une image de définition normale, les signaux KKM et KKMB changent de valeur à chaque nouvelle image.

L'adressage en lecture des mémoires 600 et 601 est effectué directement au moyen d'un compteur 645 progressant au rythme des signaux FFE.

Pour appliquer le code de lecture ou d'écriture on utilise deux multiplexeurs 688 et 689 rattachés respectivement aux mémoires 500 et 501.

Il est facile d'établir pour l'homme de l'art le circuit de transcodage 610 en programmant une mémoire morte en fonction des considérations sur la description de "l'ordre normal" et de "l'ordre compatible".

Pour résumer, l'image fournie par la caméra est une image à 1250 lignes avec entrelacement 2:1 avec une fréquence d'apparition des points images de 54 MHz. Après l'intervention du filtre FF 80, on a affaire à une image 625 lignes non en trelacée 1:1 avec une fréquence de points images égale à 54 MHz. Au moyen de l'organe 60 cette fréquence est amenée à 81 MHz. L'organe de sous-échantillonnage fournit une image à 625 lignes, entrelacée 2:1 avec une fréquence de points d'images de 13,5 MHz. A la réception, l'organe de changement de rythme de réception transforme, par insertion de "0" virtuels l'image transmise 625 lignes 2:1 à 13,5 MHz en une image 625 lignes 1:1 à 54 MHz avant de subir l'opération d'interpolation qui élabore une image 1250 lignes 1:1 à 54 MHz pour le téléviseur 50.

**Revendications**

1. Système de transmission d'images de télévision à haute définition par un canal à bande passante relativement étroite, système comportant, d'une part, une partie émission constituée d'un organe de prise de vues pour fournir lesdites images constituées par un ensemble de points ou échantillons répartis sur des lignes paires et impaires, d'un organe de filtrage pour filtrer lesdits échantillons, d'un organe de sous-échantillonnage pour prélever certains échantillons à la sortie de l'organe de filtrage et d'un circuit émetteur pour transmettre sur le canal selon des trames d'émission les échantillons prélevés et d'autre part au moins une partie réception constituée d'un circuit récepteur pour recevoir les échantillons provenant du circuit émetteur, d'un organe d'interpolation pour reconstituer des échantillons à partir des échantillons reçus et d'un premier circuit de visualisation pour transformer les échantillons reconstitués en une image restituée de haute définition, caractérisé en ce que l'organe de sous-échantillonnage est conçu pour prélever dans les images fournies par l'organe de prise de vues un certain nombre d'échantillons et pour les fournir en trois trames successives au circuit émetteur.

2. Système de transmission d'images de télévision à haute définition selon la revendication 1, caractérisé en ce que l'organe d'échantillonnage est conçu pour prélever, dans des séries de six échantillons se succédant sur les lignes et décalées d'une ligne à l'autre, le premier échantillon de la série pour la première trame, le cinquième échantillon pour la deuxième trame et le troisième échantillon pour la troisième trame et pour les fournir dans cet ordre dit "ordre normal" au circuit émetteur.

3. Système de transmission d'images de télévision à haute définition selon la revendication 1 ou 2, caractérisé en ce que l'organe d'échantillonnage est conçu pour prélever, dans des séries de six échantillons se succédant sur les li gnes et décalées d'une ligne à l'autre, le premier échantillon de la série pour la première trame, le cinquième échantillon pour la deuxième trame et le troisième échantillon pour la troisième trame et en outre conçu pour fournir au circuit émetteur des échantillons dans l'ordre dit "ordre compatible", cet ordre consistant en une suite d'échantillons à fournir pour un deuxième circuit de visualisation en quatre trames de visualisation,

- la première trame étant formée des premiers échantillons transmis de ladite série, prélevés tour à tour sur une ligne et sur la suivante,
- la deuxième, des cinquièmes échantillons transmis de la série, prélevés tour à tour sur une ligne et la suivante,
- la troisième; des troisièmes échantillons transmis de la série, prélevés tour à tour sur une ligne et la suivante,
- la quatrième, des cinquièmes échantillons transmis de la série, prélevés tour à tour sur une ligne et la suivante, trandis que la partie réception comporte un organe de changement d'ordre pour rétablir l'ordre normal à l'entrée de l'organe d'interpolation.

4. Emetteur convenant pour le système de transmission d'images de télévision à haute définition selon l'une des revendications 1 à 3, comportant la partie émission du système.

5. Récepteur convenant pour le système de transmission d'images de télévision à haute définition selon l'une des revendications 1 à 3, comportant la partie réception du système.

FIG.1

FIG.2

□ : t+4kT

☆ : t+(4k+1)T

△ : t+(4k+2)T

○ : t+(4k+3)T

FIG.3

# FIG.4

fy

576cph

P1

P3

288cph

P0

fx

702cpw

P2

351cpw

12,5Hz

25hz

P4

ft

# FIG.5

fy(cph)

576

b

fy1

RF

a

RM

fx(cpw)

702

fx1

6,25

b

a

ft
(Hz)

25

0 285 207

# FIG.6

$\square : t+3kT$

$\triangle : t+(3k+1)T$      FIG.7

$\bigcirc : t+(3k+2)T$

3-XII-PHF 87-521

# FIG.8

fy (cph)

576 cph ● PP1

PP2 ●

288 cph

PP0

702cpw      fx (cpw)

PP3 ●      351cpw      1053cpw

● PP4

f t(Hz)      16,66 Hz

# FIG.9

fy (cph)

288cph      78 cpw

200cph

247 cpw

85cph      fx (cpw)

455 cpw

RRF

8,33 Hz

RRM

ft      25 Hz

FIG.10

FIG.11

FM = FF * F1

FIG.12

FIG.13

## FIG. 14

0 285 207

6 -XII- PHF 87-521

FIG.15

0 285 207

7-XII-PHF 87-521

# FIG.16

# FIG.17

# FIG.18

# FIG.19

# FIG.20

# FIG. 21

$EI_1^2$   $EI_1^4$   $EI_1^6$   $EI_1^8$   $EI_1^{10}$   $EI_1^{12}$

$EP_2^1$   $EP_1^3$   $EP_1^5$   $EP_2^7$   $EP_1^9$   $EP_1^{11}$

LP1

LI1

LP2

# FIG. 22

$\blacktriangleright$   $t + 4.k.T$

$\triangleright$   $t + (2k+1).T$

$\blacktriangleright$   $t + (4k+2).T$

# FIG. 23

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 146 713 (NHK) <br> * Page 14, ligne 1 - page 15, ligne 4; figure 2 * <br> --- | 1-3 | H 04 N 11/00 |
| A | FR-A-2 302 645 (THOMSON-BRANDT) <br> * Page 2, lignes 8-19 * <br> --- | 1-3 | |
| A | EP-A-0 174 056 (NAGOYA UNIVERSITY) <br> * Page 8, ligne 4 - page 16, ligne 11; figures 2A,2B,3A,3B * <br> ----- | 1-3 | |

DOMAINES TECHNIQUES RECHERCHES (Int. Cl.4)

H 04 N

Le présent rapport a été établi pour toutes les revendications

| Lieu de la recherche | Date d'achèvement de la recherche | Examinateur |
|---|---|---|
| LA HAYE | 04-07-1988 | PIGNIEZ T.J.P. |